# EUROPÄISCHE PATENTSCHRIFT

(11) **EP 1 741 408 B1**
(45) Veröffentlichungstag und Bekanntmachung des Hinweises auf die Patenterteilung: **17.03.2010**
(21) Anmeldenummer: 06013184.4
(22) Anmeldetag: 27.06.2006
(51) Int. Cl.: A61D 17/00, A01K 29/00

(54) **Verfahren und Vorrichtung zum Management von milchgebenden Tieren**
Method and device for management of lactating animals
Méthode et dispositif de gestion d'animaux producteurs de lait

(30) Priorität: 04.07.2005 DE 102005031425
(43) Veröffentlichungstag der Anmeldung: 10.01.2007
(73) Patentinhaber: GEA WestfaliaSurge GmbH, 59199 Bönen (DE)
(72) Erfinder: Francke, Heinz, Dr., 59302 Oelde (DE); Müller, Christian, 59302 Oelde (DE); Bergstrom, Paul Peggy, Canton, OH 44718 (US)
(74) Vertreter: Schütte, Hartmut

(56) Entgegenhaltungen:
- EP-A- 0 913 084
- EP-A- 0 982 647
- EP-A1- 0 657 098
- WO-A-97/47187
- US-A- 3 570 448

## Beschreibung

Die vorliegende Erfindung betrifft ein Verfahren und eine Vorrichtung zum Management von milchgebenden Tieren, wie z.B. von Kühen, Schafen, Ziegen, Büffeln, Lamas, Kamelen, Dromedaren, Yaks, Elchen, Pferden und dergleichen mehr.

Die Erfindung kann beim Management von Tierherden eingesetzt werden, die konventionell gemolken werden. Die Erfindung kann auch beim Management von maschinell gemolkenen oder von halbautomatisch oder automatisch gemolkenen Tieren eingesetzt werden. Der Einsatz ist auch bei Herden möglich, bei denen z.B. ein halbautomatisches oder vollautomatisches oder roboterunterstütztes und/oder computergesteuertes Ansetzen der Zitzenbecher an die Zitzen der Tiere erfolgt.

Aus der EP 0 657 098 A1 ist ein Informationssystem zum Erhalten von Daten über Tiere bekannt geworden, bei dem eine Recheneinrichtung Abweichungen der Milchflusschararakteristik detektiert, um aus den Abweichungen der Milchflusscharakteristik auf Änderungen im Gesundheitsstatus und/oder im Reproduktionsstatus zurückzuschließen. Durch eine statistische Auswertung der gemessenen Milchflusscharakteristik werden Anzeichen für solche Änderungen erhalten und es wird auf die Änderung hingewiesen. Es ist auch möglich ein automatisches Tor gezielt zu schalten, um das Tier zu einem speziellen Raum zu leiten.

Die WO 97/47 187 A1 offenbart ein System und ein Verfahren zur automatischen Überwachung des Gesundheitszustandes einer Herde von Milchtieren, wobei es Ziel ist, die Gesundheit der Herde zu steigern. Dazu wird bei Abweichungen von Erwartungswerten auf eine mögliche Krankheit hingewiesen. Tierindividuell wird eine Fehlerverteilung abgleitet.

Weiterhin sind zum Management von milchgebenden Tieren manuelle Vorrichtungen und Verfahren im Stand der Technik bekannt geworden. Es gibt z.B. manuelle Systeme zum Management von Tieren, bei denen auf eine kreisförmige Scheibe als Symbole für die einzelne Tiere z.B. würfelförmiqe Stecker aufgesteckt werden, siehe z.B. die US 3 570 448 A1. Auf jedem Stecker steht die eindeutige Nummer, mit der das Tier identifiziert werden kann. Eine solche Brunstscheibe stellt den Zustand der Tiere über einem gesamten Jahr dar. Es gibt unterschiedliche Varianten solcher manuelle Brunstscheiben, von denen eine beispielhaft im Folgenden näher erläutert wird.

Auf einer Version einer solchen Brunstscheibe ist z.B. oben eine Markierung für die Abkalbung angebracht. Der ein Tier repräsentierende Stecker, welches frisch abgekalbt hat, wird bei diesem Beispiel am Tag der Abkalbung oben eingesteckt. Jeden Tag wird die Scheibe nun um 1° gedreht, so dass im Laufe eines Jahres die Scheibe insgesamt einmal gedreht wird.

In einem bestimmten Tagesabstand nach der Abkalbung ist eine feststehende, radiale Linie für die Besamung eingezeichnet. Tiere, die diese Linie erreichen, sollten auf Brunstzeichen überwacht werden und bei auftretender Brunst besamt werden.

Nach erfolgter Besamung werden die Stecker entsprechend mit einem Symbol für "besamt" markiert und der Stecker wird manuell in die Winkelposition der Besamungslinie zurückgesetzt, auch wenn der Abkalbungszeitpunkt schon länger her ist, als der dem Winkelabstand zwischen Abkalbungslinie und Besamungslinie zugehörige Zeitraum. Ab nun zählt die Zeit ab dem Besamungszeitpunkt.

Eine gewisse Anzahl an Tagen nach der Besamung ist eine weitere radiale Linie eingezeichnet. Wenn besamte Tiere diese Linie passieren, sollte eine Trächtigkeitsuntersuchung durchgeführt werden. Ergibt die Untersuchung, dass die Tiere nicht trächtig sind, muss eine erneute Besamung durchgeführt werden, so dass danach die Stecker für die entsprechenden Tiere zur Besamungslinie zurückgebracht werden.

Mit einer solchen Brunstscheibe erhält der Landwirt schnell Aufschluss über die Gesamtheit der Tiere. Nachteilig ist allerdings der Aufwand zur Wartung und Pflege des Systems.

Aufgabe der vorliegenden Erfindung ist es deshalb, ein einfacheres und gegebenenfalls verbessertes Verfahren, sowie eine verbesserte Vorrichtung zum Management von milchgebenden Tieren zur Verfügung zu stellen.

Die gestellte Aufgabe wird mit einem Verfahren mit den Merkmalen des Anspruchs 1, sowie mit einer erfindungsgemäßen Vorrichtung mit den Merkmalen des Anspruchs 21 gelöst. Bevorzugte Weiterbildungen der Erfindung sind Gegenstand der Unteransprüche.

Bei dem erfindungsgemäßen Verfahren zum Management von Tierherden mit einer Vielzahl von milchgebenden Tieren wird das Reproduktionsstadium jedes Tieres mit dem Laktationsstadium des Tieres in Beziehung gesetzt. Es wird wenigstens ein Zustand des Tieres mittels automatisch gewonnener sensorischer Daten ermittelt. Der Zustand jeweilige Zustand der Vielzahl von Tieren wird grafisch dargestellt.

Die erfindungsgemäße Vorrichtung zum Management von Tierherden mit einer Vielzahl von milchgebenden Tieren umfasst insbesondere wenigstens eine Recheneinrichtung und wenigstens eine Anzeigeeinrichtung. Wenigstens eine Sensoreinrichtung ist zur automatischen Erfassung von Sensordaten vorgesehen. Es wird das Reproduktionsstadium jedes Tieres mit dem Laktationsstadium des Tieres in Beziehung gesetzt. Es wird wenigstens ein Zustand des Tieres mittels automatisch gewonnener sensorischer Daten ermittelt, wobei die automatisch gewonnenen Daten der Sensoreinrichtung zur Ermittlung des wenigstens einen Zustandes des Tieres berücksichtigt werden. Weiterhin wird der jeweilige Zustand der Vielzahl von Tieren auf der Anzeigeeinrichtung grafisch dargestellt.

In einer Weiterbildung der Erfindung wird ein Tier grafisch hervorgehoben bzw. es wird die grafische Darstellung hervorgehoben, wenn die sensorischen Daten des Tieres auffällig sind und/oder auf einen veränderten Zustand hinweisen. Das bedeutet, dass bei einer Abweichung von der Norm das Tier grafisch hervorgehoben dargestellt werden kann. Z.B. kann auch bei einem Über- oder Unterschreiten um einen festen Wert oder um einen prozentualen Wert von z.B. +/-10% das Tier grafisch hervorgehoben dargestellt werden.

Erfindungsgemäß wird der jeweilige Zustand einer Vielzahl von Tieres grafisch dargestellt. Das bietet erhebliche Übersichtlichkeitsvorteile.

In einer Weiterbildung wird das Tier grafisch hervorgehoben, wenn das Tier auffällig ist. Dazu können visuelle Wahrnehmungen des Landwirts hinzugezogen und berücksichtigt werden. Wenn ein Melker z.B. optisch wahrnehmbare Veränderungen feststellt, kann er die Angaben in das Herdenmanagementsystem eingeben, so dass auch visuelle Wahrnehmungen des Melkers oder des Landwirts berücksichtigt werden.

Ebenso können jegliche visuellen, optischen oder sonstigen sensorischen Werte berücksichtigt werden, die anzeigen, dass der Zustand des Tieres vom normalen Verlauf abweicht oder die den normalen Zustand bestätigen.

Vorteilhafterweise wird der Zustand wenigstens eines Tieres über der Zeit dargestellt. Insbesondere wird der Zustand des Tieres wenigstens zeitweise über dem seit der Abkalbung verstrichenen Zeitraum aufgetragen. Vorzugsweise wird der zustand des Tieres wenigstens zeitweise in Anhängigkeit von dem Reproduktionszustand des Tieres aufgetragen. Wenn der Zustand über dem Reproduktionszustand dargestellt wird, ist der voraussichtliche Abkalbungstermin eines trächtigen Tieres leicht ersichtlich.

Bei nicht trächtigen Tieren ist besonders leicht erkennbar, welche Tiere noch besamt werden müssen und/oder bei welchen Tieren noch eine Trächtigkeitsuntersuchung erfolgen muss und/oder bei welchen Tieren eventuell Probleme mit der Frucht barkeit vorliegen. Das erleichtert das Herdenmanagement erheblich.

In einer vorteilhaften Weiterbildung erfolgt die grafische Ausgabe mittels einer Anzeigeeinrichtung. Eine geeignete Anzeigeeinrichtung ist beispielsweise ein grafisches Display, ein Bildschirm, ein Projektor, ein Personal Digital Assistent (PDA), oder ein Computer oder ein Fernsehapparat. Die Anzeige kann lokal oder entfernt ausgegeben werden. Die Verbindung der einzelnen Komponenten kann drahtgebunden oder drahtlos sein. Z.B. kann eine Verbindung über Wireless Loacal Area Network (WLAN) oder über Bluetooth oder über eine Infrarotverbindung erfolgen.

Vorzugsweise wird jedes Tier mittels eines grafischen Symbols dargestellt, wobei jedes Tier vorzugsweise eindeutig identifizierbar ist. Beispielsweise kann jedes Tier mit einem Symbol gekennzeichnet sein, dem eine eindeutige Nummer zugeordnet ist.

In vorteilhaften Weiterbildungen der Erfindung hängt wenigstens eine Eigenschaft des ein Tier repräsentierenden Symbols von dem physiologischen Zustand des jeweiligen Tieres ab.

Wenigstens eine Eigenschaft des ein Tier repräsentierenden Symbols kann von dem Gesundheitszustand und/oder der Stoffwechsellage (Ketose) des entsprechenden Tieres abhängen. Vorzugsweise hängt wenigstens eine Eigenschaft des ein Tier repräsentierenden Symbols von dem Reproduktionszustand und/oder von dem Laktationszustand des Tieres ab.

In einer bevorzugten Weiterbildung des erfindungsgemäßen Verfahrens und der erfindungsgemäßen Vorrichtung wird wenigstens eine Eigenschaft des ein Tier repräsentierenden Symbols einer Gruppe von Eigenschaften entnommen, welche das Erscheinungsbild, die Farbe, die Helligkeit, die Form und/oder die Außenkontur des Symbols umfasst.

Beispielsweise können je nach Reproduktionszustand einem Tier bzw. dem das Tier repräsentierendem Symbol unterschiedliche Farben zugeordnet werden, so dass wenigstens ein Teil des Symbols eine Farbe aufweist, die von dem Reproduktionszustand abhängt. Symbole von Tieren, die frisch abgekalbt haben, können z.B. rot dargestellt werden, während Tiere mit Brunst braun und besamte Tiere ein wenigstens teilweise blaues Symbol aufweisen. Tiere mit nachgewiesener Trächtigkeit können z.B. grün repräsentiert und trocken gestellte Tiere mit wenigstens teilweise violett gefärbten Symbolen aufgetragen werden. Auch andere Farbkombinationen sind möglich.

Vorzugsweise kann sich bei einem Tier das Symbol zur besseren Sichtbarkeit periodisch verändert. Das kann z.B. durch eine periodisches ein- und ausschalten erfolgen, oder durch ein Blinken des Symbols. Z.B. kann durch abwechselnde Darstellung in helleren und dunkleren Farbtönen, durch unterschiedliche Farben, durch eine periodisch veränderbare Größe und/oder Gestalt eine Hervorhebung erfolgen. Vorzugsweise wird das bei auffälligen Tieren durchgeführt, um dem Benutzer eine noch einfachere Ablesbarkeit und Übersicht zu ermöglichen.

So können Tiere mit automatisch detektierter Brunst entsprechend markiert werden, so dass sie dem Betrachter auf den ersten Blick auffallen. Im Stand der Technik war das nicht möglich. Zwar können mit den computergestützten Verfahren aus dem Stand der Technik Listen mit Tieren ausgegeben werden, die bestimmte Eigenschaften aufweisen, aber dann muss sich der Benutzer aus unterschiedlichsten Listen die einzelnen Informationen zusammen suchen.

Bei der Erfindung hingegen kann der Benutzer auf einen Blick eine Vielzahl von Tieren und deren momentanen Zustand erfassen. Durch die Hervorhebung spezieller Tiere sieht der Benutzer im zeitlichen Kontext direkt die Relevanz der Hervorhebung und kann entsprechend reagieren. Wird z.B. eine Kuh blinkend dargestellt, die im zeitlichen Verlauf schon weit über die Besamungslinie hinweg ist, die aber noch nicht als besamt gekennzeichnet wurde, so kann der Landwirt dieses Tier gezielter auf Brunstanzeichen überwachen. Wenn das Tier z.B. ein Pedometer als Aktivitätssensor aufweist und keinerlei Brunstanzeichen zeigt, kann der Landwirt den Sensor auf einen Defekt oder dergleichen überprüfen. Oder der Landwirt überprüft den Gesundheitsstatus des Tieres.

In bevorzugten Weiterbildungen der Erfindung wird wenigstens eine Art von sensorischen Daten verwendet, welche einer Gruppe von Sensordaten entnommen ist, welche Aktivitätssensordaten, Milchmengendaten, Milchflussdaten, Progesterontestdaten, Stoffwechselindikatoren, Mastitisindikatoren, Zellzahldaten, Leitwertsdaten ermolkener Milch, Hemmstoffmesswerte in ermolkener Milch, Milchqualitätsmesswerte, Flockenanzahl in der Milch und dergleichen mehr umfasst. Weiterhin können Sensordaten verwendet werden, die durch Sensoren aufgenommen werden, welche den physiologischen Zustand eines Tieres kennzeichnen. Es können auch Wiederkäusersensoren, Bolus mit integrierten Temperatursensoren, PH-Wert-Sensoren und Konzentrationssensoren eingesetzt und deren Daten berücksichtigt werden.

Die sensorischen Daten werden insbesondere ausgewertet und bei der Bestimmung des Zustandes des Tieres berücksichtigt.

Vorzugsweise wird ein vordefinierter Besamungszeitpunkt festgelegt. Das ist in der Regel ein Wert zwischen 30 und 60 Tagen nach Abkalbung. Auch frühere oder spätere Termine sind möglich. Ab etwa dem vordefinierten Besamungszeitpunkt werden die Tiere verstärkt auf Brunstanzeichen überwacht. Dazu helfen die automatisch gewonnenen Sensordaten, die z.B. das Symbol eines brünstigen Tieres blinkend darstellen, so dass es für den Landwirt leicht erfassbar ist.

Bei Tieren, die besamt wurden, wird vorzugsweise die Zeitzählung auf den vordefinierten Besamungszeitpunkt zurückgesetzt, so dass die Zeitachse ab da für das jeweilige Tier neu läuft bzw. die Zeit ab da neu gezählt wird.

Vorzugsweise wird ein vordefinierter Zeitpunkt zur Trächtigkeitsprüfung festgelegt. Besamte Tiere, die den vordefinierten Zeitpunkt zur Trächtigkeitsprüfung passieren, werden vom Landwirt bevorzugt auf Trächtigkeit untersucht. Wird keine Trächtigkeit festegestellt, so werden Anzeichen der nächsten Brunstphase abgewartet und das Tier erneut besamt. Das Tier wird in der Zeitzählung dann wieder zurück auf den Besamungszeitpunkt gesetzt. Bei trächtigen Tieren läuft die abgelaufene Zeit ab dem Besamungszeitpunkt weiter, so keine Änderung der Zeitzählung erfolgt.

In bevorzugten Ausgestaltungen wird die Zeit über dem Winkel aufgetragen. Vorzugsweise bedeutet ein Winkel von 360° den Zeitraum eines Jahres, so dass der gesamte Laktations- und Reproduktionszeitraum direkt überblickbar ist.

Beispielsweise kann die Darstellung einer Kreisscheibe verwendet werden. In anderen Ausgestaltungen wird die Zeit linear aufgetragen.

In bevorzugten Weiterbildungen werden die Tiere entsprechend ihrer Milchleistung gekennzeichnet. Bei einer kreisförmigen Auftragung werden Tiere mit einer hohen Milchleistung vorzugsweise radial weiter innen dargestellt. Da im Zentrum der Scheibe weniger Platz vorhanden ist, können die milchleistungsfähigsten Tiere gut überblickt werden, während bei den Tieren mit geringeren Milchleistungen ebenfalls genug Platz zur Verfügung steht.

Bei einer Auftragung entlang kartesischer Koordinaten können z.B. Tiere mit einer höheren Milchleistung weiter oben (oder weiter unten) aufgetragen werden.

Weiterhin können Tiere mit einer fallenden Milchleistung und/oder Tiere mit einer steigenden Milchleistung mit einem speziellen Symbol dargestellt werden. Wenn die Milchleistung über einen gewissen Zeitraum fällt und absolut gesehen auch entsprechend niedrige Werte aufweist, sowie das Laktationsstadium entsprechend weit fortgeschritten ist, so kann das Auswertungssignal gegeben werden, dass das entsprechende Tier trocken zu stellen ist.

Mit Hilfe mehrerer Sensoreinrichtungen kann eine automatische Plausibilitätskontrolle durchgeführt werden, so dass spezielle Tiere nur dann speziell gekennzeichnet werden, wenn die Plausibilitätskontrolle eine Bestätigung der Auswertung ergeben hat.

In weiteren Ausgestaltungen ist ein automatisches Ziehen einer Milchprobe bei Problemtieren vorgesehen, um die anderweit automatisch gewonnenen Sensordaten zu bestätigen oder zu verwerfen. Mit einer Milchprobe kann die Qualität der Milch bestimmt werden, indem die Inhaltsstoffe ermittelt werden. Auch ein Progesterontest ist möglich.

Weitere Merkmale, Eigenschaften und Vorteile der vorliegenden Erfindung ergeben sich aus der nachfolgenden Beschreibung der Ausführungsbeispiele unter Bezugnahme auf die beiliegende Zeichnung.

Darin zeigt:

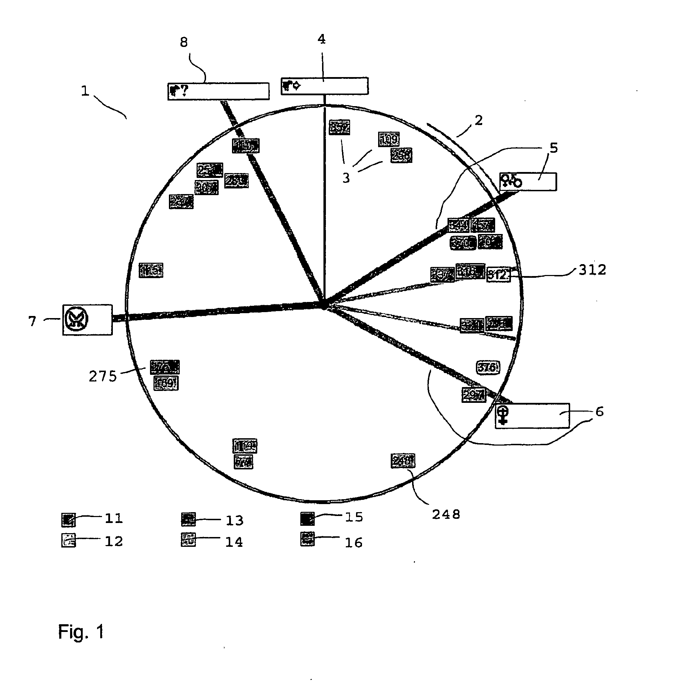

- Fig. 1: die grafische Ausgabe einer Anzeige eines erfindungsgemäßen Managementsystems.

Mit Bezug auf die beiliegende Figur wird nun ein Ausführungsbeispiel der Erfindung beschrieben. In Fig. 1 ist die grafische Ausgabe 1 dargestellt. Die einzelnen Tiere 3 werden durch mit Nummern versehene Rechtecke repräsentiert, wobei die jeweilige Nummer die Tiere eindeutig identifiziert.

Die Auftragung erfolgt über der Zeit 2 in Tagen, die hier im Uhrzeigersinn aufgetragen ist. Der Zeitpunkt der Abkalbung 4 wird hier durch eine senkrechte Linie 4 festgelegt. Am Tag der Abkalbung werden die Tiere durch Symbole auf der Linie 4 angeordnet. So hat das Tier mit der Nummer 352 erst vor einigen Tagen abgekalbt, während die mit den Nummern 109 und 258 repräsentierten Tiere schon einigen Tage zuvor abgekalbt haben.

Wenn die Tiere die radiale Linie mit dem Besamungszeitpunkt 5 erreichen bzw. in dessen Nähe kommen, dann wird auf Brunstanzeichen der Tiere 3 geachtet.

Je nach Zustand der Tiere werden die Symbole mit unterschiedlichen Farben dargestellt. Tiere, die abgekalbt haben und noch nicht besamt wurden, werden mit roten Symbolen 11 dargestellt, während Tiere mit Brunstanzeichen mit braunen Symbolen 12, besamte Tiere mit blauen Symbolen 13, Tiere mit verifizierter Trächtigkeit mit grünen Symbolen 14 und trocken stehende Tiere z.B. mit dunkelblauen Symbolen 15 aufgetragen werden. Auszusortierende oder zu schlachtende Tiere werden mit graufarbigen Symbolen 16 dargestellt.

Durch die farbliche Markierung hat der Landwirt sofort Überblick über die auffälligen Tiere, bei denen z.B. die Besamung ansteht oder aber bei denen der physiologische Zustand in Abhängigkeit von Zeitabstand seit Abkalbung bzw. Besamung nicht dem gewünschten Zustand entspricht. Der Laktationszustand des Tieres wird mit dem Reproduktionszustand verknüpft, wobei bei der Auftragung automatisch gewonnene sensorische Informationen berücksichtigt und ausgewertet werden.

Im Ausführungsbeispiel wird das Symbol für das Tier 312 durch Blinken hervorgehoben, weil das Tier 312 noch nicht besamt wurde, aber Brunstanzeichen zeigt. Die Brunstanzeichen werden hier durch einen automatischen Aktivitätssensor in Form eines Schrittzählers detektiert. In bevorzugten Ausgestaltungen werden Progesterontests automatisch durchgeführt, um eine Brunsterkennung zu gewährleisten.

Bei dem Tier 312 sind die Bedingungen erfüllt und es wird auf die ausstehende Besamung durch Blinken deutlich hingewiesen. Nach erfolgter Besamung wird das Symbol für das Tier 312 blau gefärbt und auf der Zeitskala winkelmäßig auf die Linie 5 zurück verschoben.

Wenn später die Trächtigkeit nachgewiesen wird, wird das Symbol für das Tier 312 grün gefärbt. Ansonsten muss bei fehlgeschlagener Besamung das Tier erneut besamt werden, wenn Brunstanzeichen auftauchen. Dann wird das Symbol für das Tier wieder auf die Besamungslinie 5 zurückgesetzt.

Bei Erreichen des Zeitpunkts 6 zum Überprüfen der Trächtigkeit werden die relevanten Tiere angezeigt und der Landwirt kann den Trächtigkeitstest vornehmen. In speziellen Ausgestaltungen wird ein Test automatisch initiiert.

Wenn ein Tier in die Nähe der Linie 7 kommt, die den Zeitpunkt zum Trockenstellen anzeigt und die Milchleistung des Tieres nachlässt, kann das Tier trocken gestellt werden. Das ist hier im Ausführungsbeispiel z.B. mit dem Tier mit der Nummer 275 erfolgt, obwohl die Linie 7 noch nicht erreicht wurde.

Die Linie 8 zeigt den erwarteten Abkalbungszeitpunkt an.

Auch Leitwertmessungen können berücksichtigt werden. Ebenso können auch andere Mastitisindikatoren, sowie Stoffwechselindikatoren eingesetzt werden, um den Zustand des Tieres zu ermitteln.

### Bezugszeichen:

- 1: Grafische Darstellung
- 2: Zeitskala
- 3: Tier
- 4: Abkalbungszeitpunkt
- 5: Besamungszeitpunkt
- 6: Zeitpunkt zum Überprüfen der Trächtigkeit
- 7: Zeitpunkt zum Trockenstellen
- 8: Erwarteter Abkalbungszeitpunkt
- 11: Symbol für Tiere, die abgekalbt haben
- 12: Symbol für Tiere, bei denen Brunst beobachtet wurde
- 13: Symbol für besamte Tiere
- 14: Symbol für trächtige Tiere
- 15: Symbol für trockenstehende Tiere
- 16: Symbol für auszusortierende Tiere
- 275: trockenstehendes Tier
- 312: brünstiges Tier

## Patentansprüche

1. Verfahren zum Management von Tierherden mit einer Vielzahl von milchgebenden Tieren, wobei das Reproduktionsstadium jedes Tieres mit dem Laktationsstadium des Tieres in Beziehung gesetzt wird, wobei wenigstens ein Zustand des Tieres mittels automatisch gewonnener sensorischer Daten ermittelt wird, wobei der jeweilige Zustand der Vielzahl von Tieren grafisch dargestellt wird.

2. Verfahren nach Anspruch 1, wobei das Tier grafisch hervorgehoben wird, wenn die sensorischen Daten des Tieres auffällig sind oder auf einen veränderten Zustand hinweisen.

3. Verfahren nach Anspruch 1 oder 2, wobei das Tier grafisch hervorgehoben wird, insbesondere wenn das Tier auffällig ist.

4. Verfahren nach mindestens einem der vorhergehenden Ansprüche, bei dem wenigstens ein Zustand wenigstens eines Tieres über der Zeit dargestellt wird.

5. Verfahren nach mindestens einem der vorhergehenden Ansprüche, bei dem die grafische Ausgabe mittels einer Anzeigeeinrichtung erfolgt.

6. Verfahren nach mindestens einem der vorhergehenden Ansprüche, bei dem das Tier mittels eines grafischen Symbols dargestellt wird.

7. Verfahren nach dem vorhergehenden Anspruch, bei dem wenigstens eine Eigenschaft des Symbols von dem physiologischen Zustand des Tieres abhängt.

8. Verfahren nach einem der Ansprüche 6 oder 7, bei dem wenigstens eine Eigenschaft des Symbols von dem Gesundheitszustand und/oder dem Stoffwechselzustand des Tieres abhängt.

9. Verfahren nach mindestens einem der Ansprüche 6 bis 8, bei dem wenigstens eine Eigenschaft des Symbols von dem Reproduktionszustand des Tieres abhängt.

10. Verfahren nach mindestens einem der Ansprüche 6 bis 9, bei wenigstens eine Eigenschaft des Symbols von dem Laktationszustand des Tieres abhängt.

11. Verfahren nach mindestens einem der Ansprüche 6 bis 10, bei dem wenigstens eine Eigenschaft des Symbols einer Gruppe von Eigenschaften entnommen ist, welche das Erscheinungsbild, die Farbe, die Helligkeit, die Form und/oder die Außenkontur des Symbols umfasst.

12. Verfahren nach mindestens einem der Ansprüche 6 bis 11, bei dem sich das Symbol zur besseren Sichtbarkeit periodisch verändert.

13. Verfahren nach mindestens einem der vorhergehenden Ansprüche, bei dem wenigstens eine Art von sensorischen Daten verwendet wird, welche einer Gruppe von Sensordaten entnommen ist, welche Aktivitätssensordaten, Milchmengendaten, Milchflussdaten, Progesterontestdaten, Zellzahldaten, Mastitisindikatoren, Stoffwechselindikatoren, Leitwertsdaten ermolkener Milch, Hemmstoffmesswerte in ermolkener Milch, sowie Daten anderer Sensoren, welche den physiologischen Zustand eines Tieres kennzeichnen, und dergleichen mehr umfasst.

14. Verfahren nach mindestens einem der vorhergehenden Ansprüche, bei dem ein Besamungszeitpunkt festgelegt wird.

15. Verfahren nach dem vorhergehenden Anspruch, bei dem bei besamten Tieren die Zeit ab dem Besamungszeitpunkt neu gezählt wird.

16. Verfahren nach mindestens einem der vorhergehenden Ansprüche, bei dem ein Zeitpunkt zur Trächtigkeitsprüfung festgelegt wird.

17. Verfahren nach dem vorhergehenden Anspruch, bei dem bei trächtigen Tieren die Zeit ab dem Besamungszeitpunkt weiter gezählt wird.

18. Verfahren nach mindestens einem der vorhergehenden Ansprüche, bei dem die Zeit über einem Winkel aufgetragen wird.

19. Verfahren nach mindestens einem der vorhergehenden Ansprüche, bei dem die Zeit linear aufgetragen wird.

20. Verfahren nach mindestens einem der vorhergehenden Ansprüche, bei der die Tiere entsprechend ihrer Milchleistung aufgetragen werden.

21. Vorrichtung zum Management von Tierherden mit einer Vielzahl von milchgebenden Tieren, mit einer Recheneinrichtung und einer Anzeigeelnrichtung und wenigstens einer Sensoreinrichtung zur automatischen Erfassung von Sensordaten, wobei das Reproduktionsstadium jedes Tieres mit dem Laktationsstadium des Tieres in Beziehung gesetzt wird, wobei die automatisch gewonnenen Daten der Sensoreinrichtung zur Ermittlung eines Zustandes des Tieres berücksichtigt werden und wobei der jeweilige Zustand der Vielzahl von Tieren auf der Anzeigeeinrichtung grafisch dargestellt wird.

## Claims

1. A method for the management of animal herds having a plurality of lactating animals wherein the reproduction stage of each animal is correlated with the lactation stage of the animal, wherein at least one state of the animal is determined by means of automatically obtained sensor data wherein the respective state of the plurality of animals is graphically illustrated.

2. The method of claim 1 wherein the animal is graphically highlighted when the sensor data of the animal is conspicuous and/or indicates changes in its state.

3. The method of claim 1 or 2 wherein the animal is graphically highlighted in particular when the animal is conspicuous.

4. The method according to at least one of the preceding claims, wherein at least one state of at least one animal is illustrated over the time.

5. The method according to at least one of the preceding claims, wherein the graphic output occurs by means of a display means.

6. The method according to at least one of the preceding claims, wherein the animal is represented by a graphic symbol.

7. The method according to the preceding claim wherein at least one property of the symbol depends on the physiological state of the animal.

8. The method according to one of the claims 6 or 7 wherein at least one property of the symbol depends on the state of health and/or the metabolic state of the animal.

9. The method according to at least one of the claims 6 to 8 wherein at least one property of the symbol depends on the reproduction state of the animal.

10. The method according to at least one of the claims 6 to 9 wherein at least one property of the symbol depends on the lactation state of the animal.

11. The method according to at least one of the claims 6 to 10 wherein at least one property of the symbol is taken from a group of properties comprising the appearance, the color, the brightness, the shape and/or the outer contour of the symbol.

12. The method according to at least one of the claims 6 to 11 wherein the symbol changes periodically for better visibility.

13. The method according to at least one of the preceding claims wherein at least one type of sensor data is used which is taken from a group of sensor data comprising activity sensor data, milk quantity data, milk flow data, progesterone testing data, cell count data, mastitis indicators, metabolism indicators, conductivity data of extracted milk, measured inhibitor values in extracted milk, and data from other sensors which characterize the physiological state of an animal, and the like.

14. The method according to at least one of the preceding claims wherein an insemination date is set.

15. The method according to the preceding claim wherein for inseminated animals the time metering starts anew from the insemination date.

16. The method according to at least one of the preceding claims wherein a date for pregnancy testing is set.

17. The method according to the preceding claim wherein for pregnant animals the time metering continues from the insemination date.

18. The method according to at least one of the preceding claims wherein the time is plotted over an angle.

19. The method according to at least one of the preceding claims wherein the time is plotted linearly.

20. The method according to at least one of the preceding claims wherein the animals are plotted in relation to their milk yield.

21. A device for the management of animal herds having a plurality of lactating animals including a computing means and a display means and at least one sensor means for automatically obtaining sensor data wherein the reproduction stage of each animal is correlated with the lactation stage of the animal wherein the automatically obtained data from the sensor means are taken into account for determining a state of the animal and wherein the respective state of the plurality of animals is graphically illustrated on the display means.

## Revendications

1. Procédé de suivi de troupeaux d'animaux composés de plusieurs animaux laitiers, le stade de gestation de chaque animal étant mis en relation avec son stade de lactation, un état de l'animal au moins étant indiqué par des informations captées par voie sensorielle et de façon automatique, l'état respectif de chaque animal étant illustré graphiquement.

2. Procédé selon la revendication 1, l'illustration graphique faisant ressortir l'animal dont les informations captées par voie sensorielle sont singulières ou signalent un changement dans l'état de l'animal.

3. Procédé selon la revendication 1 ou 2, l'illustration graphique faisant surtout ressortir l'animal dès lors que celui-ci est singulier.

4. Procédé selon au moins l'une quelconque des revendications précédentes, au moins un état d'au moins un animal étant représenté dans le temps.

5. Procédé selon au moins l'une quelconque des revendications précédentes, la représentation graphique s'effectuant au moyen d'un dispositif d'affichage.

6. Procédé selon au moins l'une quelconque des revendications précédentes, l'animal étant représenté au moyen d'un symbole graphique.

7. Procédé selon la revendication précédente, une caractéristique au moins du symbole graphique dépendant de l'état physiologique de l'animal.

8. Procédé selon l'une quelconque des revendications 6 ou 7, au moins une caractéristique du symbole graphique dépendant de l'état de santé et/ou de l'état métabolique de l'animal.

9. Procédé selon l'une quelconque des revendications 6 à 8, au moins une caractéristique du symbole graphique dépendant de l'état de gestation de l'animal.

10. Procédé selon l'une quelconque des revendications 6 à 9, au moins une caractéristique du symbole graphique dépendant de l'état de gestation de l'animal.

11. Procédé selon au moins l'une quelconque des revendications 6 à 10, pour lequel au moins une caractéristique du symbole graphique provient d'un groupe de caractéristiques comprenant l'aspect, la couleur, la luminosité, la forme et/ou les contours extérieurs du symbole.

12. Procédé selon au moins l'une quelconque des revendications 6 à 11, le symbole graphique changeant à intervalles réguliers pour être plus visible.

13. Procédé selon au moins l'une quelconque des revendications précédentes, alors qu'est utilisée au moins une sorte d'information de nature sensorielle issue d'un ensemble d'informations captées par voie sensorielle regroupant les données sensorielles relatives à l'activité, à la quantité de lait, au flux de lait, les données de test du taux de progestérone, celles relatives au nombre de cellules, les indicateurs de mastite, les indicateurs de métabolisme, les données sur la conductibilité du lait trait, les valeurs d'inhibiteur mesurées dans le lait trait, ainsi que d'autres informations captées par voie sensorielle pour caractériser l'état physiologique d'un animal, ainsi que d'autres données similaires.

14. Procédé selon au moins l'une des revendications précédentes, permettant de déterminer un moment d'insémination.

15. Procédé selon la revendication précédente, dans lequel pour les animaux inséminés le décompte du temps est remis à zéro au moment de l'insémination.

16. Procédé selon au moins l'une des revendications précédentes, permettant de déterminer un moment pour la détection de gestation.

17. Procédé selon la revendication précédente, dans lequel pour les animaux gravides le temps continue à être décompté à partir du moment de l'insémination.

18. Procédé selon au moins l'une des revendications précédentes, dans lequel le temps est indiqué par le biais d'un angle.

19. Procédé selon au moins l'une des revendications précédentes, dans lequel le temps est indiqué par mode linéaire.

20. Procédé selon au moins l'une des revendications précédentes, dans lequel les animaux sont indiqués en fonction de leur production de lait.

21. Procédé de suivi de troupeaux d'animaux composés de plusieurs animaux laitiers, comprenant un dispositif de calcul et un dispositif d'affichage ainsi qu'au moins un dispositif de capteurs pour capter de façon automatique des informations sensorielles, le stade de gestation de chaque animal étant mis en relation avec son stade de lactation, les informations captées par voie sensorielle et de façon automatique concernant un état de l'animal étant prises en compte et l'état respectif des différents animaux étant illustré graphiquement sur le dispositif d'affichage.
